# EUROPEAN PATENT APPLICATION

(11) **EP 4 317 312 A1**
(43) Date of publication of application: **07.02.2024**
(21) Application number: 22781577.6
(22) Date of filing: 29.03.2022
(51) Int. Cl.: C08L 55/02, C08L 25/12, C08K 5/3492

(54) **THERMOPLASTIC RESIN COMPOSITION AND ARTICLE MANUFACTURED USING SAME**

(30) Priority: 31.03.2021 KR 20210042360
(71) Applicant: Lotte Chemical Corporation, Seoul, 05551 (KR)
(72) Inventor: HWANG, Donggeun, Uiwang-si, Gyeonggi-do 16073 (KR); YIM, Jeaseok, Uiwang-si, Gyeonggi-do 16073 (KR); CHOI, Woojin, Uiwang-si, Gyeonggi-do 16073 (KR); KWON, Keehae, Uiwang-si, Gyeonggi-do 16073 (KR); KIM, Younghyo, Uiwang-si, Gyeonggi-do 16073 (KR)
(74) Representative: Germain Maureau
(86) International application number: PCT/KR2022/004427
(87) International publication number: WO 2022/211458

(57) **Abstract**

Provided are a thermoplastic resin composition and an article manufactured using same, the thermoplastic resin composition including, based on 100 parts by weight of a base resin including (A) 30 to 40 wt% of a butadiene-based rubber-modified aromatic vinyl compound-vinyl cyanide compound graft copolymer; (B) 20 to 40 wt% of a first aromatic vinyl compound-vinyl cyanide compound copolymer having a glass transition temperature (T_{g}) of 107 to 110 °C; and (C) 20 to 50 wt% of a second aromatic vinyl compound-vinyl cyanide compound copolymer having a non-linear structure, (D) 15 to 25 parts by weight of a bromine-based flame retardant; and (E) 2 to 6 parts by weight of a third aromatic vinyl compound-vinyl cyanide compound copolymer having a weight average molecular weight of 3,000,000 to 6,000,000 g/mol.

## Description

### [Technical Field]

A thermoplastic resin composition and an article manufactured using same are disclosed.

### [Background Art]

A styrene-based resin represented by an acrylonitrile-butadiene-styrene copolymer (ABS) resin is widely used in automobiles, home appliances, OA devices, etc. due to excellent moldability, mechanical characteristics, appearance, secondary workability, and the like.

An article using the styrene-based resin also may be widely applied to various products that require painting/non-painting, for example, interior/exterior materials for automobiles, etc.

Recently, in Europe and other countries, there has been a trend to further strengthen flame retardancy standards for the interior/exterior materials for automobiles to prevent casualties from fire accidents in automobiles such as buses and trucks, and accordingly, in Europe, ECE R 118, a new flame retardancy standard for the interior/exterior materials for automobiles requiring higher flame retardancy and impact resistance than before, has recently been announced.

Accordingly, there is a need to develop a material capable of maintaining high flame retardancy, impact resistance, and heat resistance as well as moldability such as sheet extrusion properties and the like for use in the interior/exterior materials for automobiles.

### [Disclosure]

### [Description of the Drawings]

### [Technical Problem]

A thermoplastic resin composition with excellent sheet extrusion properties, flame retardancy, heat resistance, and impact resistance is provided.

Another embodiment provides an article manufactured using the thermoplastic resin composition.

### [Technical Solution]

According to an embodiment, a thermoplastic resin composition includes, based on 100 parts by weight of a base resin including (A) 30 to 40 wt% of a butadiene-based rubber-modified aromatic vinyl compound-vinyl cyanide compound graft copolymer; (B) 20 to 40 wt% of a first aromatic vinyl compound-vinyl cyanide compound copolymer having a glass transition temperature (T_{g}) of 107 to 110 °C; and (C) 20 to 50 wt% of a second aromatic vinyl compound-vinyl cyanide compound copolymer having a non-linear structure, (D) 15 to 25 parts by weight of a bromine-based flame retardant; and (E) 2 to 6 parts by weight of a third aromatic vinyl compound-vinyl cyanide compound copolymer having a weight average molecular weight of 3,000,000 to 6,000,000 g/mol.

The (A) butadiene-based rubber-modified aromatic vinyl compound-vinyl cyanide compound graft copolymer may include a core made of a butadiene-based rubbery polymer and a shell formed by graft polymerization of an aromatic vinyl compound and a vinyl cyanide compound to the core. It has a core-shell structure, and an average particle diameter of the butadiene-based rubbery polymer may be 200 to 400 nm.

The (A) butadiene-based rubber-modified aromatic vinyl compound-vinyl cyanide compound graft copolymer may be an acrylonitrile-butadiene-styrene graft copolymer (g-ABS).

The (B) first aromatic vinyl compound-vinyl cyanide compound copolymer may include 55 to 80 wt% of a component derived from the aromatic vinyl compound and 20 to 45 wt% of a component derived from vinyl cyanide compound, based on 100 wt%, and may have a weight average molecular weight of 80,000 to 300,000 g/mol.

In the (B) first aromatic vinyl compound-vinyl cyanide compound copolymer, the aromatic vinyl compound-vinyl cyanide compound copolymer may be a styrene-acrylonitrile copolymer, and an oligomer content may be less than 0.4 wt% based on 100 wt% of the styrene-acrylonitrile copolymer.

The (C) second aromatic vinyl compound-vinyl cyanide compound copolymer may be a styrene-acrylonitrile copolymer (SAN) having a weight average molecular weight of 200,000 to 500,000 g/mol.

The (D) bromine-based flame retardant may include 60 wt% or more of bromine based on 100 wt%.

The (D) bromine-based flame retardant may be 2,4,6-tris(2,4,6-tribromophenoxy)-1,3,5-triazine.

In the (E) third aromatic vinyl compound-vinyl cyanide compound copolymer, the aromatic vinyl compound-vinyl cyanide compound copolymer may be a styrene-acrylonitrile copolymer.

According to an embodiment, the thermoplastic resin composition may further include at least one additive selected from a nucleating agent, a coupling agent, filler, a plasticizer, impact-reinforcing agent, lubricant, antibacterial agent, a release agent, a heat stabilizer, an antioxidant, an ultraviolet (UV) stabilizer, a pigment, and a dye.

According to another embodiment, an article manufactured using the above-described thermoplastic resin composition is provided.

The article may have a Charpy impact strength of greater than or equal to 35 kJ/m² as measured on a 4 mm thick specimen according to the ISO 179 standard.

The article may have a flame retardancy of V-1 grade or higher as measured on a 3.2 mm thick specimen according to the UL-94 standard.

The article may have an elongation at break of greater than or equal to 30% as measured on a 3.2 mm thick specimen according to the ASTM D638 standard.

The article may have a Vicat softening temperature (VST) of greater than or equal to 94 °C, as measured according to the ISO 306 standard.

### [Advantageous Effects]

A thermoplastic resin composition having excellent sheet extrusion properties, flame retardancy, heat resistance, and impact resistance, and an article using the same can be provided.

In addition, the thermoplastic resin composition according to an embodiment and the article using the same exhibit excellent flame retardancy, impact resistance, heat resistance, and sheet extrusion properties, and can be widely applied to a variety of painted/unpainted products, and is especially useful for automotive interior/exterior materials.

### [Mode for Invention]

Hereinafter, embodiments of the present invention are described in detail. However, these embodiments are exemplary, the present invention is not limited thereto and the present invention is defined by the scope of claims.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, the weight average molecular weight is measured by dissolving a powder sample in an appropriate solvent, for example tetrahydrofuran (THF), and then performing gel permeation chromatography (GPC, a 1200 series made by Agilent Technologies Inc.) (a standard sample is polystyrene made by Shodex).

A thermoplastic resin composition according to an embodiment includes 100 parts by weight of a base resin including (A) 30 to 40 wt% of a butadiene-based rubber-modified aromatic vinyl compound-vinyl cyanide compound graft copolymer; (B) 20 to 40 wt% of a first aromatic vinyl compound-vinyl cyanide compound copolymer having a glass transition temperature (T_{g}) of 107 to 110 °C; and (C) 20 to 50 wt% of a second aromatic vinyl compound-vinyl cyanide compound copolymer having a non-linear structure, (D) 15 to 25 parts by weight of a bromine-based flame retardant; and (E) 2 to 6 parts by weight of a third aromatic vinyl compound-vinyl cyanide compound copolymer having a weight average molecular weight of 3,000,000 to 6,000,000 g/mol.

Hereinafter, each component included in the thermoplastic resin composition will be described in detail.

### (A) Butadiene-based rubber-modified aromatic vinyl compound-vinyl cyanide compound graft copolymer

In an embodiment, the (A) butadiene-based rubber-modified aromatic vinyl compound-vinyl cyanide compound graft copolymer provides excellent impact resistance to the thermoplastic resin composition.

In an embodiment, the (A) butadiene-based rubber-modified aromatic vinyl compound-vinyl cyanide compound graft copolymer may have a core-shell structure including a core made of a butadiene-based rubbery polymer(core), and a shell formed by graft polymerization of an aromatic vinyl compound and a vinyl cyanide compound to the core.

The (A) butadiene-based rubber-modified aromatic vinyl compound-vinyl cyanide compound graft copolymer may be obtained by adding an aromatic vinyl compound and a vinyl cyanide compound to a butadiene-based rubbery polymer and performing graft polymerization through a conventional polymerization method such as emulsion polymerization and bulk polymerization.

Based on 100 wt% of the (A) butadiene-based rubber-modified aromatic vinyl compound-vinyl cyanide compound graft copolymer, the butadiene-based rubbery polymer core may be included in an amount of 40 to 65 wt%. Meanwhile, the shell may include the aromatic vinyl compound and the vinyl cyanide compound in a weight ratio of 8:2 to 6:4.

The butadiene-based rubbery polymer may be selected from a butadiene rubbery polymer, a butadiene-styrene rubbery polymer, a butadiene-acrylonitrile rubbery polymer, a butadiene-acrylate rubbery polymer, and a mixture thereof.

The aromatic vinyl compound may be selected from styrene, α-methylstyrene, p-methylstyrene, p-t-butylstyrene, 2,4-dimethylstyrene, chlorostyrene, vinyltoluene, vinylnaphthalene, and a mixture thereof.

The vinyl cyanide compound may be selected from acrylonitrile, methacrylonitrile, fumaronitrile, and a mixture thereof.

An average particle diameter of the butadiene-based rubbery polymer may be 200 to 400 nm, for example 200 to 250 nm, for example 200 to 300 nm, for example 200 to 350 nm, for example 250 to 400 nm. When the above range is satisfied, the thermoplastic resin composition can exhibit excellent impact resistance and appearance characteristics.

In an embodiment, the butadiene-based rubber-modified aromatic vinyl compound-vinyl cyanide compound graft copolymer may be acrylonitrile-butadiene-styrene graft copolymer (g-ABS).

The (A) butadiene-based rubber-modified aromatic vinyl compound-vinyl cyanide compound graft copolymer may be for example included in an amount of 30 to 40 wt%, for example 30 to 35 wt%, for example 35 to 40 wt% based on 100 wt% of the base resin. Within the above weight range, the thermoplastic resin composition can exhibit excellent impact resistance.

### (B) First aromatic vinyl compound-vinyl cyanide compound copolymer

In an embodiment, the (B) first aromatic vinyl compound-vinyl cyanide compound copolymer can improve the heat resistance of the thermoplastic resin composition and maintain compatibility between components at a certain level.

The (B) first aromatic vinyl compound-vinyl cyanide compound copolymer may have an oligomer content of less than 0.4 wt% based on 100 wt%. When the oligomer content is within the above range, generation of volatile organic compounds (VOCs) can be minimized and the glass transition temperature can be increased.

The (B) first aromatic vinyl compound-vinyl cyanide compound copolymer may have a glass transition temperature of 107 to 110 °C. In the above glass transition temperature range, the heat resistance of the thermoplastic resin composition can be improved.

The (B) first aromatic vinyl compound-vinyl cyanide compound copolymer may have a weight average molecular weight of greater than or equal to 80,000 g/mol, for example greater than or equal to 85,000 g/mol, for example greater than or equal to 90,000 g/mol, and for example less than or equal to 300,000 g/mol, for example less than or equal to 200,000 g/mol, for example 80,000 to 300,000 g/mol, for example 80,000 to 200,000 g/mol.

In an embodiment, the (B) first aromatic vinyl compound-vinyl cyanide compound copolymer may be prepared by using a conventional polymerization method such as emulsion polymerization, suspension polymerization, solution polymerization, or bulk polymerization of an aromatic vinyl compound and a vinyl cyanide compound.

The aromatic vinyl compound may be selected from styrene, α-methylstyrene, p-methylstyrene, p-t-butylstyrene, 2,4-dimethylstyrene, chlorostyrene, vinyltoluene, vinylnaphthalene, and a mixture thereof.

The vinyl cyanide compound may be selected from acrylonitrile, methacrylonitrile, fumaronitrile, and mixtures thereof.

The (B) first aromatic vinyl compound-vinyl cyanide compound copolymer may include a component derived from the aromatic vinyl compound in an amount of, for example greater than or equal to 55 wt%, greater than or equal to 60 wt%, greater than or equal to 65 wt%, greater than or equal to 70 wt%, or greater than or equal to 75 wt%, and less than or equal to 80 wt%, less than or equal to 75 wt%, less than or equal to 70 wt%, less than or equal to 65 wt%, or less than or equal to 60 wt%, for example 55 to 80 wt%, for example 60 to 75 wt% based on 100 wt%.

In addition, the (B) first aromatic vinyl compound-vinyl cyanide compound copolymer may include a component derived from the vinyl cyanide compound in an amount of, for example greater than or equal to 20 wt%, greater than or equal to 25 wt%, greater than or equal to 30 wt%, greater than or equal to 35 wt%, or greater than or equal to 40 wt%, and less than or equal to 45 wt%, less than or equal to 40 wt%, less than or equal to 35 wt%, less than or equal to 30 wt%, or less than or equal to 25 wt%, for example 20 to 45 wt%, for example 25 to 40 wt% based on 100 wt%.

In an embodiment, in the (B) first aromatic vinyl compound-vinyl cyanide compound copolymer, the aromatic vinyl compound-vinyl cyanide compound copolymer may be a styrene-acrylonitrile copolymer (SAN).

In an embodiment, the (B) first aromatic vinyl compound-vinyl cyanide compound copolymer may be included in an amount of 20 to 40 wt%, for example 20 to 35 wt%, for example 20 to 30 wt%, or for example 25 to 40 wt% based on 100 wt% of the base resin. Within the above weight range, the thermoplastic resin composition can exhibit excellent moldability and mechanical properties.

### (C) Second aromatic vinyl compound-vinyl cyanide compound copolymer

In an embodiment, the (C) second aromatic vinyl compound-vinyl cyanide compound copolymer may enable obtaining a sheet of uniform thickness when manufacturing an article through sheet extrusion molding.

The (C) second aromatic vinyl compound-vinyl cyanide compound copolymer may have a non-linear structure.

Among commonly used butadiene-based rubber-modified aromatic vinyl compound-vinyl cyanide compound copolymer resin compositions, an acrylonitrile-butadiene-styrene (ABS) resin composition is mainly used for injection molding, and when it is sheet extruded, there is a problem in that sheet thickness variation occurs due to inferior elongation characteristics. To improve this problem, the elongation characteristics may be improved by using a styrene-based copolymer resin with a high weight average molecular weight in the ABS resin composition. However, when a thickness of the sheet becomes thinner or a size of the article increases, there is a problem in that sheet thickness variation is not improved because sufficient elongation characteristics are not achieved.

The (C) second aromatic vinyl compound-vinyl cyanide compound copolymer overcomes these problems and dramatically improves elongation characteristics through a non-linear structure, and thus it is possible to provide a thermoplastic resin composition with improved moldability so that it is suitable for molding processing such as sheet extrusion molding and vacuum forming. In an embodiment, when the (C) second aromatic vinyl compound-vinyl cyanide compound copolymer is included in the thermoplastic resin composition, a sheet of uniform thickness can be obtained when manufacturing an article through sheet extrusion molding.

The (C) second aromatic vinyl compound-vinyl cyanide compound copolymer may have a weight average molecular weight of, for example 200,000 to 500,000 g/mol, for example 250,000 to 500,000 g/mol, for example 300,000 to 500,000 g/mol, or for example 300,000 to 500,000 g/mol. Within the above weight average molecular weight range, moldability may be excellent during sheet extrusion molding.

The (C) second aromatic vinyl compound-vinyl cyanide compound copolymer may be prepared by using a conventional polymerization method such as emulsion polymerization, suspension polymerization, solution polymerization, or bulk polymerization of an aromatic vinyl compound and a vinyl cyanide compound.

The aromatic vinyl compound may be selected from styrene, α-methylstyrene, p-methylstyrene, p-t-butylstyrene, 2,4-dimethylstyrene, chlorostyrene, vinyltoluene, vinylnaphthalene, and a mixture thereof.

The vinyl cyanide compound may be selected from acrylonitrile, methacrylonitrile, fumaronitrile, and a mixture thereof.

The (C) second aromatic vinyl compound-vinyl cyanide compound copolymer may include a component derived from the aromatic vinyl compound in an amount of, for example greater than or equal to 55 wt%, greater than or equal to 60 wt%, greater than or equal to 65 wt%, greater than or equal to 70 wt%, or greater than or equal to 75 wt%, and less than or equal to 80 wt%, less than or equal to 75 wt%, less than or equal to 70 wt%, less than or equal to 65 wt%, or less than or equal to 60 wt%, for example 55 to 80 wt%, for example 60 to 75 wt% based on 100 wt%.

In addition, the (C) second aromatic vinyl compound-vinyl cyanide compound copolymer may include a component derived from the vinyl cyanide compound in an amount of, for example greater than or equal to 20 wt%, greater than or equal to 25 wt%, greater than or equal to 30 wt%, greater than or equal to 35 wt%, or greater than or equal to 40 wt%, and less than or equal to 45 wt%, less than or equal to 40 wt%, less than or equal to 35 wt%, less than or equal to 30 wt%, or less than or equal to 25 wt%, for example 20 to 45 wt%, for example 25 to 40 wt% based on 100 wt%.

In an embodiment, in the (C) second aromatic vinyl compound-vinyl cyanide compound copolymer, the aromatic vinyl compound-vinyl cyanide compound copolymer may be a styrene-acrylonitrile copolymer (SAN).

In an embodiment, the (C) second aromatic vinyl compound-vinyl cyanide compound copolymer may be included in an amount of 20 to 50 wt%, for example 25 to 50 wt%, or for example 20 to 45 wt% based on 100 wt% of the base resin. Within the above weight range, the thermoplastic resin composition can exhibit excellent sheet extrusion moldability.

### (D) Bromine-based flame retardant

In an embodiment, the (D) bromine-based flame retardant may impart flame retardancy to a thermoplastic resin composition.

The (D) bromine-based flame retardant may include 60 wt% or more of bromine based on 100 wt%. Within the above wt% range, the flame retardancy of the thermoplastic resin composition may be improved, and the impact resistance of the thermoplastic resin composition may also be improved.

The (D) bromine-based flame retardant may be 2,4,6-tris(2,4,6-tribromophenoxy)-1,3,5-triazine but is not limited thereto.

The (D) brominated flame retardant may be included in an amount of 15 to 25 parts by weight based on 100 parts by weight of the base resin ((A)+(B)+(C)). Within the above parts by weight range, the flame retardancy and impact resistance of the thermoplastic resin composition may be improved, and unpleasant odors that may be generated by adding a flame retardant may be minimized.

### (E) Third aromatic vinyl compound-vinyl cyanide compound copolymer

In one embodiment, the (E) third aromatic vinyl compound-vinyl cyanide compound copolymer may further improve performance of the thermoplastic resin composition, such as sheet extrusion characteristics, heat resistance, and impact resistance.

The (E) third aromatic vinyl compound-vinyl cyanide compound copolymer may have a weight average molecular weight of, for example 3,000,000 to 6,000,000 g/mol, for example 4,000,000 to 6,000,000 g/mol, or for example 3,000,000 to 5,000,000 g/mol.

The (E) third aromatic vinyl compound-vinyl cyanide compound copolymer may be prepared by using a conventional polymerization method such as emulsion polymerization, suspension polymerization, solution polymerization, or bulk polymerization of an aromatic vinyl compound and a vinyl cyanide compound.

The aromatic vinyl compound may be selected from styrene, α-methylstyrene, p-methylstyrene, p-t-butylstyrene, 2,4-dimethylstyrene, chlorostyrene, vinyltoluene, vinylnaphthalene, and a mixture thereof.

The vinyl cyanide compound may be selected from acrylonitrile, methacrylonitrile, fumaronitrile, and mixtures thereof.

The (E) third aromatic vinyl compound-vinyl cyanide compound copolymer may include a component derived from the aromatic vinyl compound in an amount of, for example greater than or equal to 55 wt%, greater than or equal to 60 wt%, greater than or equal to 65 wt%, greater than or equal to 70 wt%, or greater than or equal to 75 wt%, and less than or equal to 80 wt%, less than or equal to 75 wt%, less than or equal to 70 wt%, less than or equal to 65 wt%, or less than or equal to 60 wt%, for example 55 to 80 wt%, or for example 60 to 75 wt% based on 100 wt%.

In addition, the (E) third aromatic vinyl compound-vinyl cyanide compound copolymer may include a component derived from the vinyl cyanide compound in an amount of, for example greater than or equal to 20 wt%, greater than or equal to 25 wt%, greater than or equal to 30 wt%, greater than or equal to 35 wt%, or greater than or equal to 40 wt%, and less than or equal to 45 wt%, less than or equal to 40 wt%, less than or equal to 35 wt%, less than or equal to 30 wt%, or less than or equal to 25 wt%, for example 20 to 45 wt%, or for example 25 to 40 wt% based on 100 wt%.

In an embodiment, in the (E) third aromatic vinyl compound-vinyl cyanide compound copolymer, the aromatic vinyl compound-vinyl cyanide compound copolymer may be a styrene-acrylonitrile copolymer (SAN).

In an embodiment, the (E) third aromatic vinyl compound-vinyl cyanide compound copolymer may be included in an amount of 2 to 6 parts by weight, for example 3 to 5 parts by weight, based on 100 parts by weight of the base resin. Within the above weight part range, the performance of the thermoplastic resin composition, such as sheet extrusion characteristics, heat resistance, and impact resistance, may be improved.

### (F) Additives

In addition to the components (A) to (E), the thermoplastic resin composition according to an embodiment may further include one or more additives required in order to balance physical properties while exhibiting excellent sheet extrusion characteristics, flame retardancy, and impact resistance without deterioration of other physical properties, or one or more additives necessary according to a final use of the thermoplastic resin composition.

Specifically, the additives may be a nucleating agent, a coupling agent, filler, a plasticizer, an impact modifier, a lubricant, an antibacterial agent, a release agent, a heat stabilizer, an antioxidant, an ultraviolet (UV) stabilizer, a pigment, a dye, which may be used alone or in a combination of two or more.

These additives may be appropriately included within a range that does not impair the physical properties of the thermoplastic resin composition, and specifically, may be included in an amount of less than or equal to 20 parts by weight based on 100 parts by weight of the base resin, but are not limited thereto.

The thermoplastic resin composition according to the present invention may be prepared by a known method for preparing a thermoplastic resin composition.

Another embodiment provides an article produced using a thermoplastic resin composition according to an embodiment. The article may be produced by various methods known in the art, such as extrusion molding using the thermoplastic resin composition.

The article may have a Charpy impact strength measured on a 4 mm thick specimen according to the ISO 179 standard of, for example greater than or equal to 35 kJ/m², for example greater than or equal to 37 kJ/m².

The article may have a flame retardancy of V-1 grade or higher as measured on a 3.2 mm thick specimen according to the UL-94 standard.

The article may have an elongation rate of greater than or equal to 30% for example greater than or equal to 35%, or for example greater than or equal to 40% as measured on a 3.2 mm thick specimen according to the ASTM D638 standard.

The article may have a Vicat softening temperature (VST) of greater than or equal to 94 °C, for example greater than or equal to 95 °C as measured according to the ISO 306 standard.

As such, the article has excellent sheet extrusion characteristics, flame retardancy, heat resistance, and impact resistance, and can be advantageously used in various electrical and electronic components, building materials, sporting goods, and automobile interior/exterior parts.

Hereinafter, the present invention is illustrated in more detail with reference to examples. These examples, however, are not in any sense to be interpreted as limiting the scope of the invention.

### Examples

The thermoplastic resin compositions of Examples and Comparative Examples were each prepared according to the component content ratios shown in Table 1.

In Table 1, (A), (B), and (C) belonged to a base resin and expressed as wt% based on a total weight of the base resin, and (D) and (E) were added to the base resin and expressed as parts by weight based on 100 parts by weight of the base resin.

The components described in Table 1 were continuously and quantitatively fed into a supply unit (a barrel temperature: about 220 °C) of a twinscrew extruder (L/D = 44, a diameter = 35 mm) and then, extruded/processed to prepare a thermoplastic resin composition in the form of a pellet. Subsequently, the thermoplastic resin composition pellet was dried at about 80 °C for about 2 hours and then, manufactured into 3.2 mm and 4 mm-thick sheets by using a sheet extrusion equipment (National Extrusion & Manufacturing Co.) at a barrel temperature of about 210 °C, and the sheets were cut into a specimen shape for evaluating properties, preparing specimens for evaluating properties.

**(Table 1)**

| | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|
| (A) | 35 | 35 | 35 | 35 | 35 | 35 | 35 |
| (B1) | 30 | 30 | 30 | - | 30 | - | - |
| (B2) | - | - | - | 25 | - | - | 30 |
| (C1) | 35 | 35 | 35 | 40 | - | 35 | 35 |
| (C2) | - | - | - | - | 35 | 30 | - |
| (D1) | 21 | 21 | - | - | 21 | - | 21 |
| (D2) | - | - | 25 | 25 | - | 25 | - |
| (E) | 3 | 5 | 3 | - | - | 3 | 3 |

Each component in Table 1 was described as follows. (A) Butadiene-based rubber-modified aromatic vinyl compound-vinyl cyanide compound graft copolymer

An acrylonitrile-butadiene-styrene graft copolymer (Lotte Chemical Corp.) including about 58 wt% of a core formed of a butadiene rubbery polymer (an average particle diameter: about 250 nm) and a shell formed by graft-polymerizing acrylonitrile and styrene (in a weight ratio = about 2.5 : about 7.5) onto the core was used.

### (B) First aromatic vinyl compound-vinyl cyanide compound copolymer

(B1) A styrene-acrylonitrile copolymer (Lotte Chemical Corp.) copolymerized from a monomer mixture of about 28 wt% of acrylonitrile and about 72 wt% of styrene and having a weight average molecular weight of about 110,000 g/mol, a glass transition temperature of about 108 °C, and an oligomer content of about 0.3 wt% was used.

(B2) An α-methylstyrene-styrene-acrylonitrile copolymer (Lotte Chemical Corp.) copolymerized from a monomer mixture of about 27 wt% of acrylonitrile, about 54 wt% of α-methylstyrene, and about 19 wt% of styrene and having a weight average molecular weight of about 160,000 g/mol and a glass transition temperature of about 116 °C was used.

### (C) Second aromatic vinyl compound-vinyl cyanide compound copolymer

(C1) A styrene-acrylonitrile copolymer with a non-linear structure (Lotte Chemical Corp.) copolymerized from a monomer mixture of about 29 wt% of acrylonitrile and about 71 wt% of styrene and having a weight average molecular weight of about 390,000 g/mol was used.

(C2) A styrene-acrylonitrile copolymer with a linear structure (Lotte Chemical Corp.) copolymerized from a monomer mixture of about 28 wt% of acrylonitrile and about 72 wt% of styrene and having a weight average molecular weight of about 130,000 g/mol was used.

### (D) Bromine-based flame retardant

(D1) 2,4,6-tris(2,4,6-tribromophenoxy)-1,3,5-triazine having a bromine content of about 63 wt% (Product name: FR-245, ICL Industrial Products Ltd.) was used.

(D2) A bromide epoxy oligomer resin having a bromine content of about 58 wt% (YDB-406, Kukdo Chemical Co., Ltd.) was used.

(E) An aromatic vinyl compound-vinyl cyanide compound copolymer having a weight average molecular weight of about 5,000,000 g/mol (Zibo Hauxing Additives Co., Ltd.) was used.

### Evaluation of Physical Properties

Experiment results are shown in Table 2.
(1) Impact resistance (unit: kJ/m²): A 4 mm-thick sheet extrusion article was cut into a specimen shape for measuring Charpy impact strength according to ISO 179 standard and then, measured with respect to Charpy impact strength according to the ISO 179 standard.
(2) Elongation (unit: %): A 3.2 mm-thick sheet extrusion article was cut into a specimen shape for measuring tensile strength according to ASTM D638 standard and then, measured with respect to elongation at break, under a tensile speed of 5 mm/min according to ASTM D638.
(3) Flame Retardancy (unit: grade): A 3.2 mm-thick sheet extrusion article was cut into a specimen shape for measuring flame retardancy according to UL-94 standard and then, measured with respect to flame retardancy grade according to an UL-94 vertical test.
(4) Heat Resistance (unit: °C): A 4 mm-thick sheet extrusion article was measured with respect to a Vicat softening temperature (VST) at a load of 5 kg and a temperature increase rate of 50°C/hr according to ISO 306 B50 standard.
(5) Appearance: A 3.2 mm-thick sheet extrusion article specimen was observed on the surface by using a microscope. Specifically, in a reference area of 100 mm (width) x 100 mm (length) x 3.2 mm (thickness), the number of external appearance defects such as foreign substances, pin holes, and the like was counted and evaluated according to the following criteria.
Very good: No appearance defects observed
Good: 10 or fewer appearance defects observed
Normal: 10 to 20 appearance defects observed
Bad: More than 20 appearance defects observed

**(Table 2)**

| | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|
| Impact resistance | 36 | 38 | 30 | 25 | 35 | 35 | 28 |
| Elongation rate | 40 | 50 | 30 | 30 | 25 | 40 | 20 |
| Flame retardancy | V-1 | V-1 | V-1 | V-1 | V-1 | V-1 | V-1 |
| Heat resistance | 96 | 95 | 95 | 98 | 97 | 93 | 98 |
| Appearance | Very good | Good | Good | Bad | Normal | Very good | Very good |

Referring to Tables 1 and 2, as shown in Examples 1 and 2, (A) a butadiene-based rubber-modified aromatic vinyl compound-vinyl cyanide compound graft copolymer, (B) a first aromatic vinyl compound-vinyl cyanide compound copolymer having a glass transition temperature (T_{g}) of 107 °C to 110 °C, (C) a second aromatic vinyl compound-vinyl cyanide compound copolymer having a non-linear structure, (D) a bromine-based flame retardant, and (E) a third aromatic vinyl compound-vinyl cyanide compound copolymer having a weight average molecular weight of 3,000,000 to 6,000,000 g/mol were used in each content according to one embodiment to provide a thermoplastic resin composition having excellent impact resistance, flame retardancy, sheet extrusion characteristics (elongation characteristics), heat resistance, and appearance characteristics and an article using the same.

As described above, the present invention has been described through preferred embodiments, but a person having an ordinary skill would understand easily that the present invention is not limited thereto, and various modifications and variations may be possible without departing from the concept and scope of the following claims.

## Claims

1. A thermoplastic resin composition, comprising
based on 100 parts by weight of a base resin including
(A) 30 to 40 wt% of a butadiene-based rubber-modified aromatic vinyl compound-vinyl cyanide compound graft copolymer;
(B) 20 to 40 wt% of a first aromatic vinyl compound-vinyl cyanide compound copolymer having a glass transition temperature (T_{g}) of 107 to 110 °C; and
(C) 20 to 50 wt% of a second aromatic vinyl compound-vinyl cyanide compound copolymer having a non-linear structure,
(D) 15 to 25 parts by weight of a bromine-based flame retardant; and
(E) 2 to 6 parts by weight of a third aromatic vinyl compound-vinyl cyanide compound copolymer having a weight average molecular weight of 3,000,000 to 6,000,000 g/mol.

2. The thermoplastic resin composition of claim 1, wherein
the (A) butadiene-based rubber-modified aromatic vinyl compound-vinyl cyanide compound graft copolymer has a core-shell structure including a core made of a butadiene-based rubbery polymer and a shell formed by graft polymerization of an aromatic vinyl compound and a vinyl cyanide compound to the core, and
an average particle diameter of the butadiene-based rubbery polymer is 200 to 400 nm.

3. The thermoplastic resin composition of claim 1 or claim 2, wherein
the (A) butadiene-based rubber-modified aromatic vinyl compound-vinyl cyanide compound graft copolymer is an acrylonitrile-butadiene-styrene graft copolymer (g-ABS).

4. The thermoplastic resin composition of any one of claim 1 to claim 3, wherein
the (B) first aromatic vinyl compound-vinyl cyanide compound copolymer includes
55 to 80 wt% of a component derived from the aromatic vinyl compound and 20 to 45 wt% of a component derived from vinyl cyanide compound, based on 100 wt%, and
has a weight average molecular weight of 80,000 to 300,000 g/mol.

5. The thermoplastic resin composition of any one of claim 1 to claim 4, wherein
in the (B) first aromatic vinyl compound-vinyl cyanide compound copolymer, the aromatic vinyl compound-vinyl cyanide compound copolymer is a styrene-acrylonitrile copolymer, and an oligomer content is less than 0.4 wt% based on 100 wt% of the styrene-acrylonitrile copolymer.

6. The thermoplastic resin composition of any one of claim 1 to claim 5, wherein
in the (C) second aromatic vinyl compound-vinyl cyanide compound copolymer, the aromatic vinyl compound-vinyl cyanide compound copolymer is a styrene-acrylonitrile copolymer (SAN) having a weight average molecular weight of 200,000 to 500,000 g/mol.

7. The thermoplastic resin composition of any one of claim 1 to claim 6, wherein
the (D) bromine-based flame retardant includes 60 wt% or more of bromine based on 100 wt%.

8. The thermoplastic resin composition of any one of claim 1 to claim 7, wherein
the (D) bromine-based flame retardant is 2,4,6-tris(2,4,6-tribromophenoxy)-1,3,5-triazine.

9. The thermoplastic resin composition of any one of claim 1 to claim 8, wherein
in the (E) third aromatic vinyl compound-vinyl cyanide compound copolymer, the aromatic vinyl compound-vinyl cyanide compound copolymer is a styrene-acrylonitrile copolymer.

10. The thermoplastic resin composition of any one of claim 1 to claim 9, wherein
the thermoplastic resin composition further includes at least one additive selected from a nucleating agent, a coupling agent, filler, a plasticizer, impact-reinforcing agent, lubricant, antibacterial agent, a release agent, a heat stabilizer, an antioxidant, an ultraviolet (UV) stabilizer, a pigment, and a dye.

11. An article manufactured using the above-described thermoplastic resin composition of any one of claim 1 to claim 10.

12. The article of claim 11, wherein
the article has a Charpy impact strength of greater than or equal to 35 kJ/m² as measured on a 4 mm thick specimen according to the ISO 179 standard.

13. The article of claim 11 or claim 12, wherein
the article has a flame retardancy of V-1 grade or higher as measured on a 3.2 mm thick specimen according to the UL-94 standard.

14. The article of any one of claim 11 to claim 13, wherein
the article has an elongation at break of greater than or equal to 30% as measured on a 3.2 mm thick specimen according to the ASTM D638 standard.

15. The article of any one of claim 11 to claim 14, wherein
the article has a Vicat softening temperature (VST) of greater than or equal to 94 °C, as measured according to the ISO 306 standard.
